# EUROPÄISCHE PATENTANMELDUNG

(11) **EP 1 424 523 A1**
(43) Veröffentlichungstag der Anmeldung: **02.06.2004**
(21) Anmeldenummer: 03090393.4
(22) Anmeldetag: 19.11.2003
(51) Int. Cl.: F16L 13/14, F16L 33/207

(54) **Rohrverbindung**

(30) Priorität: 27.11.2002 DE 10255897
(71) Anmelder: Mapress GmbH & Co. KG, 40764 Langenfeld (DE)
(72) Erfinder: Speckemeyer, Jens, 45475 Mülheim (DE)
(74) Vertreter: Meissner, Peter E., Dipl.-Ing.

(57) **Zusammenfassung**

Die Erfindung betrifft eine Rohrverbindung, bestehend aus einem metallischen Pressfitting (4, 15), der mindestens einen wulstartig ausgebildeten, sich nach außen erstreckenden Abschnitt (7) aufweist, in dem ein einlegbares Element anordenbar ist und an diesen Abschnitt (7) sich ein zylindrisch ausgebildeter Bereich (5) anschließt, der am Ende der Erstreckung mit einem einen Anschlag bildenden Übergang (6, 14) versehen ist und einem Leitungsrohr (1), bestehend aus einem dünnwandigen Metallrohr (3) und einer stoffschlüssig damit verbundenen Kunststoffummantelung (2), das bis zum Übergang (6, 14) in den Pressfitting (4, 15) einschiebbar ist, und mindestens im Einschiebebereich auf der Innenseite des Leitungsrohres (1) eine Innenstützhülse (10, 19, 20) angeordnet ist. Dabei ist das im wulstartig ausgebildeten Abschnitt (7) anordenbare Element als Haltering (8) ausgebildet, der auf der dem Leitungsrohr (1) zugewandten Seite mit einer zum Fixieren bzw. Verklammem des Leitungsrohres geeigneten Oberflächenstruktur (9) versehen ist.

## Beschreibung

Die Erfindung betrifft eine Rohrverbindung, bestehend aus einem metallischen Pressfitting und einem aus einem dünnwandigen Metallrohr und einer stoffschlüssig damit verbundenen Kunststoffummantelung bestehenden Leitungsrohr gemäß dem Oberbegriff des Patentanspruches 1.

Aus der EP 0 923 693 ist eine Rohrverbindung bekannt, bestehend aus einem Pressfitting aus korrosionsbeständigem Werkstoff wie Edelstahl, Kupfer oder Titan und einem eingeschobenen kunststoffummantelten Metallrohr, welches aus dem gleichen korrosionsbeständigen Werkstoff hergestellt ist. Die Kunststoffummantelung ist stoffschlüssig mit dem dünnwandigen Metallrohr verbunden. Zur Aufrechterhaltung der Qualität der Verpressung wird vor dem Einschub in den Pressfitting der Endbereich des Leitungsrohres abgemantelt und mit einer Innenstützhülse versehen.

Eine Rohrverbindung mit einer in das Metallrohr eingeschobenen Innenstützhülse ist ebenfalls aus der EP 0 343 395 B1 bekannt. Diese Innenstützhülse ermöglicht es Metallrohre zu verpressen, deren Quetschgrenze und Elastizitätsmodul niedriger sind als die des Pressfittings.

Eine Rohrverbindung bestehend aus einem Pressfitting und einem eingeschobenen kunststoffummantelten Metallrohr ist auch dem Firmenprospekt Viega Journal, Heft 9, Ausgabe 03/02 zu entnehmen. Danach ist es bekannt, dass der Endbereich des Leitungsrohres vor dem Einschieben in den Pressfitting abgemantelt werden muss, um eine Metall-auf-Metall-Verpressung zu erzielen. Auch bei dieser Rohrverbindung wird eine Innenstützhülse verwendet.

Die nach dem Stand der Technik bekannten Rohrverbindungen mit Pressfitting und kunststoffummanteltem dünnwandigem Metallrohr haben alle den Nachteil, dass die Umhüllung im Endbereich des Leitungsrohres vor dem Einschieben in den Pressfitting abgemantelt werden muss, um eine qualitätssichere Verbindung durch eine Metall-auf-Metall-Verpressung zu erzielen. Die Verpressung hat dabei sicherzustellen, dass zum Einen eine Dichtwirkung zum Anderen eine Sicherung gegen axiales Verschieben erreicht wird.

Die Dichtwirkung wird dadurch erreicht, dass der Dichtring im Wulst des Pressfittings bei der Verpressung elastisch verformt wird und durch die entstehenden Rückstellkräfte das Leitungsrohr gegen den Pressfitting abdichtet. Die axiale Sicherung gegen Verschieben erfolgt beim Verpressen durch sickenartige Eindrücke im zylindrischen Bereich des Pressfittings in unmittelbarer Nachbarschaft an den den Dichtring aufnehmenden Wulst.

Ein weiterer Nachteil der bekannten Rohrverbindungen mit Leitungsrohren ist, dass für die Abmantelung der meist sehr dünnwandigen Metallrohre im Bereich < 0,2 mm Spezialwerkzeuge notwendig sind und für die Abmantelung ein zusätzlicher Arbeitsgang erforderlich wird. Außerdem erfordert die Abmantelung handwerkliches Geschick, um eine Beschädigung des Metallrohres zu vermeiden.

Aufgabe der Erfindung ist es deshalb, eine Rohrverbindung der gattungsgemäßen Art anzugeben, mit der unter Beibehaltung des bewährten Presssystems auf die Abmantelung des Endbereichs des Leitungsrohres verzichtet werden kann.

Diese Aufgabe wird nach dem Oberbegriff in Verbindung mit den kennzeichnenden Merkmalen des Anspruches 1 gelöst. Vorteilhafte Weiterbildungen sind Gegenstand von Unteransprüchen.

Nach der Lehre der Erfindung wird zur Lösung dieser Aufgabe anstatt des bekannten Dichtrings im Pressfitting ein Haltering verwendet, der beim Verpressen das Leitungsrohr fixiert bzw. verklammert, um ein Kriechen der Kunststoffummantelung unter Last zu vermeiden.

Um die Funktion des Fixierens bzw. Verklammems zu erfüllen, weist der vorzugsweise aus Kunststoff hergestellte Haltering auf der dem Leitungsrohr zugewandten Seite eine dafür geeignete Oberflächenstruktur auf.

Die für die Fixierung bzw. Verklammerung notwendige Oberflächenstruktur kann auf verschiedene Weise ausgebildet sein. Denkbar sind z. B. zahnartige Ausbildungen oder sehr rauhe Oberflächen.

Für den Haltering können außer Kunststoff auch andere Materialien verwendet werden. Bei der Materialauswahl muss berücksichtigt werden, dass im Hinblick auf die Kunststoffummantelung des Metallrohres eine Materialkombination gewählt wird, die bezüglich der Fixierung bzw. Verklammerung und der damit erreichbaren axialen Verschiebefestigkeit der Rohrverbindung den Anforderungen genügt. Auch sind bei der Auswahl z. B. zeitliche oder temperaturabhängige Einflüsse auf die Eigenschaften der Fixierung bzw. Verklammerung zu berücksichtigen.

Bei der erfindungsgemäßen Rohrverbindung sind gegenüber dem Stand der Technik die Wirkebenen für das Abdichten und der axialen Sicherung vertauscht.

Die axiale Sicherung gegen Verschieben wird bei der erfindungsgemäßen Rohrverbindung über die Fixierung bzw. Verklammerung des Halterings mit der Kunststoffummantelung des Metallrohres erreicht. Die Dichtfunktion wird beim Verpressen durch umlaufende sickenartige Eindrücke im zylindrischen Bereich des Pressfittings in unmittelbarer Nachbarschaft an den den Haltering aufnehmenden Wulst mit der Kunststoffoberfläche des Leitungsrohres erreicht.

Vorteil der erfindungsgemäßen Rohrverbindung ist, dass die Ummantelung des Metallrohres im Endbereich nicht mehr entfemt werden muss, da durch den Fixierungs- bzw. Verklammerungseffekt des Halterings trotz der Kriecheigenschaften der Kunststoffummantelung eine direkte Verpressung des Leitungsrohres möglich ist.

Hierdurch entfällt für den Handwerker bei der Montage der Rohrverbindung ein zusätzlicher Arbeitsgang. Ein Spezialwerkzeug zur Abmantelung wird nicht mehr benötigt.

Aus Stabilitätsgründen ist zur Abstützung des dünnwandigen Metallrohres beim Verpressen des Leitungsrohres die Anordnung einer Innenstützhülse weiterhin erforderlich.

Um das Einschieben der Stützhülse in das Leitungsrohr zu erleichtern, ist als weiteres Merkmal die Stützhülse vorteilhaft mit einer stimseitigen Anschrägung versehen. Nach Einschieben des mit der Stützhülse versehenen Leitungsrohres bis zum Anschlag des Pressfittings wird der Pressvorgang vorteilhaft mittels handelsüblichem Werkzeug vorgenommen.

Bei weiteren Ausführungsformen ist die Stützhülse vorab im Pressfitting angeordnet. Die Verbindung der Stützhülse mit dem Pressfitting kann dabei auf form-, kraft- oder stoffschlüssige Weise erfolgen.

Diese Ausbildungen haben den Vorteil, dass eine werkseitige Vormontierung der Innenstützhülse im Pressfitting vorgenommen werden kann und dass der Handwerker bei der Herstellung der Rohrverbindung die Stützhülse nicht mehr separat handhaben muss. Auch wird hierdurch ein möglicherweise fehlerhaftes Einschieben der Innenstützhülse in das Leitungsrohr vermieden. Weiterhin ist es vorteilhaft, dass der Pressvorgang auch bei diesen Ausführungsformen mittels handelsüblichem Werkzeug vorgenommen werden kann.

Weitere Merkmale, Vorteile und Einzelheiten der Erfindung ergeben sich aus der nachfolgenden Beschreibung.

Es zeigen:
- Figur 1: halbseitiger Längsschnitt einer ersten Ausführungsform der erfindungsgemäßen Rohrverbindung,
- Figur 2: wie Figur 1, jedoch eine zweite Ausführungsform,
- Figur 3: wie Figur 1, jedoch eine dritte Ausführungsform.

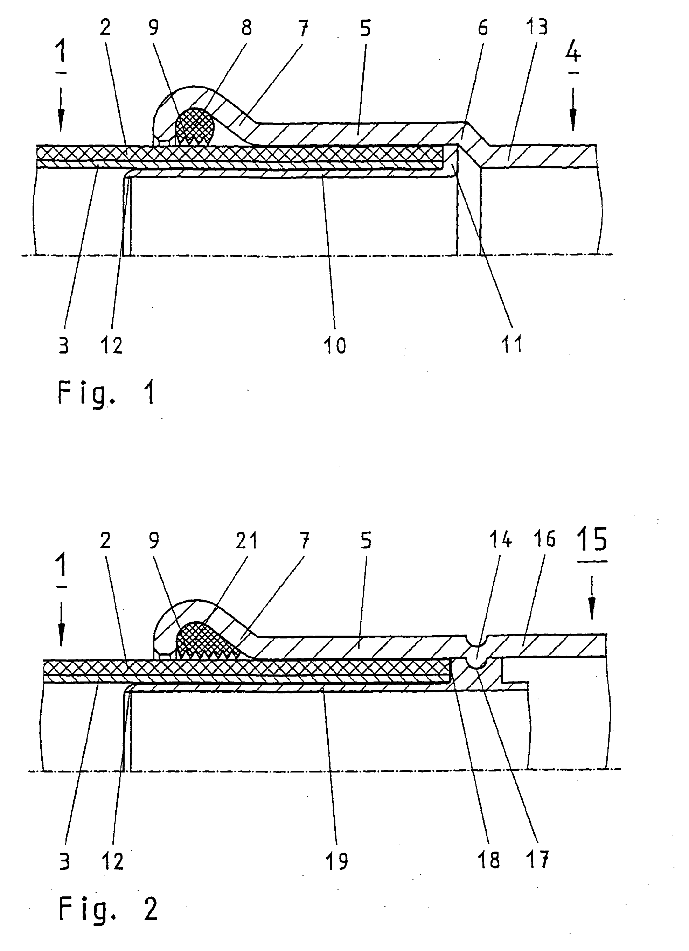

Figur 1 zeigt einen halbseitigen Längsschnitt einer ersten Ausführungsform der erfindungsgemäßen Rohrverbindung. Sie besteht aus einem Pressfitting 4 der am offenen Ende einen wulstartig ausgebildeten, sich nach außen erstreckenden Abschnitt 7 aufweist, in dem ein Haltering 8, mit einer zum Fixieren bzw. Verklammem des Leitungsrohres 1 geeigneten Oberflächenstruktur 9, angeordnet ist. An den Abschnitt 7 schließt sich ein zylindrischer Bereich 5 an, der am Ende der Erstreckung übergeht in einen den Anschlag für das zu verbindende Leitungsrohr 1 bildenden Übergang 6.

Um die Qualität der Verpressung sicherzustellen und die Gefahr des Einbeulens zu mindem, wird vor dem Einschieben in den Pressfitting 4 in das Leitungsrohr 1 eine Innenstützhülse 10 eingeschoben. Der sich nach außen erstreckende Kragen 11 kommt nach dem Einschieben in den Pressfitting 4 an dem den Anschlag bildenden Übergang 6 zur Anlage. Zum leichteren Einschieben in das Leitungsrohr 1 ist die Innenstützhülse 10 am einschubseitigen Ende mit einer stimseitigen Anschrägung 12 versehen.

Figur 2 zeigt eine zweite Ausführungsform der erfindungsgemäßen Rohrverbindung, wobei für gleiche Teile gleiche Bezugszeichen verwendet worden sind. Im Unterschied zur Ausführungsform gemäß Figur 1 besteht die Rohrverbindung aus einem Pressfitting 15 mit einer darin vorab montierten Innenstützhülse 19. Die Verbindung der Innenstützhülse 19 mit dem Pressfitting 15 erfolgt formschlüssig zwischen Sicke 14 und entsprechender außenseitiger Ausnehmung 17, der radial sich nach außen erstreckenden ringförmigen Verdickung 18. Diese ringförmige Verdickung 18 bildet einschubseitig einen axialen Anschlag, an den das in den Pressfitting 15 eingeschobene bzw. über die Innenstützhülse 19 geschobene Leitungsrohr 1 zur Anlage kommt. Zum leichteren Aufschieben auf die Innenstützhülse 19 ist diese am einschubseitigen Ende mit einer stimseitigen Anschrägung 12 versehen.

Als wesentlicher Unterschied zur Ausführungsform in Figur 1 ist der Haltering 21 vorteilhaft so ausgebildet, dass im unverpressten Zustand das Kammervolumen des wulstartigen Abschnitts 7 nahezu vollständig ausgefüllt wird. Hierdurch wird eine Vergrößerung der Verklammerungsfläche mit der Kunststoffummantelung 2 des Metallrohres 3 erreicht, so dass höhere Axialkräfte übertragbar werden.

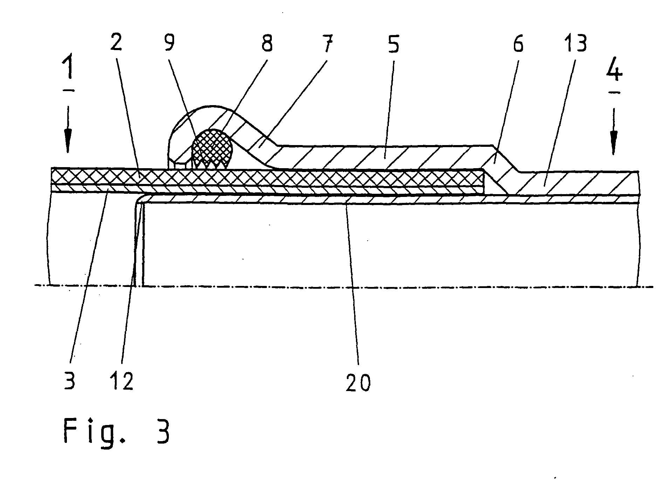

Figur 3 zeigt eine dritte Ausführungsform der erfindungsgemäßen Rohrverbindung, wobei für gleiche Teile wieder gleiche Bezugszeichen verwendet worden sind. Bei dieser Ausführungsform ist die Innenstützhülse 20 ebenfalls vorab im Pressfitting 4 montiert. Im Unterschied zur Ausführungsform gemäß Figur 2 ist die Innenstützhülse 20 als zylindrisches Rohr ausgebildet. Die Innenstützhülse 20 ist im Kontaktbereich des zylindrischen Bereichs 13 mit dem Pressfitting 4 kraft- oder stoffschlüssig verbunden. Das Leitungsrohr 1 kommt nach dem Einschieben in den Pressfitting 4 bzw. nach dem Aufschieben auf die Innenstützhülse 20 an dem einen Anschlag bildenden Übergang 6 zur Anlage. Zum leichteren Aufschieben auf die Innenstützhülse 20 ist diese am einschubseitigen Ende wiederum mit einer stimseitigen Anschrägung 12 versehen.

### Bezugszeichenliste

| **Nr.** | **Bezeichnung** |
|---|---|
| 1 | Leitungsrohr |
| 2 | Kunststoffummantelung |
| 3 | Metallrohr |
| 4 | Pressfitting gemäß erster und dritter Ausführungsform |
| 5 | zylindrischer Bereich zu 4 und 15 |
| 6 | Übergang |
| 7 | wulstartiger Abschnitt |
| 8 | Haltering gemäß erster und dritter Ausführungsform |
| 9 | Oberflächenstruktur |
| 10 | Innenstützhülse gemäß erster Ausführungsform |
| 11 | Kragen |
| 12 | Anschrägung |
| 13 | zylindrischer Bereich zu 15 |
| 14 | Sicke |
| 15 | Pressfitting gemäß zweiter Ausführungsform |
| 16 | zylindrischer Bereich zu 15 |
| 17 | Ausnehmung |
| 18 | ringförmige Verdickung |
| 19 | Innenstützhülse gemäß zweiter Ausführungsform |
| 20 | Innenstützhülse gemäß dritter Ausführungsform |
| 21 | Haltering gemäß zweiter Ausführungsform |

## Patentansprüche

1. Rohrverbindung, bestehend aus einem metallischen Pressfitting (4, 15), der mindestens einen wulstartig ausgebildeten, sich nach außen erstreckenden Abschnitt (7) aufweist, in dem ein einlegbares Element anordenbar ist und an diesen Abschnitt (7) sich ein zylindrisch ausgebildeter Bereich (5) anschließt, der am Ende der Erstreckung mit einem einen Anschlag bildenden Übergang (6, 14) versehen ist und einem Leitungsrohr (1), bestehend aus einem dünnwandigen Metallrohr (3) und einer stoffschlüssig damit verbundenen Kunststoffummantelung (2), das bis zum Übergang (6, 14) in den Pressfitting (4, 15) einschiebbar ist, und mindestens im Einschiebebereich auf der Innenseite des Leitungsrohres (1) eine Innenstützhülse (10, 19, 20) angeordnet ist,
**dadurch gekennzeichnet,**
**dass** das im wulstartig ausgebildeten Abschnitt (7) anordenbare Element als Haltering (8) ausgebildet ist, der auf der dem Leitungsrohr (1) zugewandten Seite mit einer zum Fixieren bzw. Verklammem des Leitungsrohres geeigneten Oberflächenstruktur (9) versehen ist.

2. Rohrverbindung nach Anspruch 1
**dadurch gekennzeichnet,**
**dass** der Haltering (8) aus Kunststoff gefertigt ist.

3. Rohrverbindung nach Anspruch 1 und 2
**dadurch gekennzeichnet,**
**dass** die Oberflächenstruktur (9) zahnartig ausgebildet ist.

4. Rohrverbindung nach Anspruch 1
**dadurch gekennzeichnet,**
**dass** am stimseitigen Ende des Leitungsrohres (1) die Innenstützhülse (10) einen sich nach außen erstreckenden Kragen (11) aufweist und am anderen Ende mit einer stimseitigen Anschrägung (12) versehen ist, wobei der Kragen (11) nach dem Einschub des Leitungsrohres (1) am Übergang (6, 14) zur Anlage kommt.

5. Rohrverbindung nach Anspruch 1
**dadurch gekennzeichnet,**
**dass** sich an den, als Absatz (6) ausgebildeten Übergang, ein zweiter zylindrisch ausgebildeter Bereich (13) anschließt, der einen geringeren Innendurchmesser aufweist, als der erste zylindrisch ausgebildete Bereich (5).

6. Rohrverbindung nach Anspruch 1
**dadurch gekennzeichnet,**
**dass** am Ende der Erstreckung des ersten zylindrisch ausgebildeten Bereichs (5) eine nach innen gerichtete Sicke (14) ausgebildet ist, an die sich ein zylindrisch ausgebildeter Bereich (16) anschließt, der den gleichen Innendurchmesser aufweist, wie der erste zylindrisch ausgebildete Bereich (5).

7. Rohrverbindung nach Anspruch 1
**dadurch gekennzeichnet,**
**dass** die innenstützhülse (19) am stimseitigen Ende des Leitungsrohres (1) eine radial sich nach außen erstreckende ringförmige Verdickung (18) aufweist, die außenseitig mit einer zur Aufnahme der Sicke (14) geeigneten Ausnehmung (17) versehen ist.

8. Rohrverbindung nach Anspruch 7
**dadurch gekennzeichnet,**
**dass** die radiale Erstreckung der ringförmigen Verdickung (18) mindestens so groß ist wie die radiale Dicke des Leitungsrohres.

9. Rohrverbindung nach Anspruch 1
**dadurch gekennzeichnet,**
**dass** die Innenstützhülse (20) als zylindrisches Rohr ausgebildet ist, das im Bereich des zweiten zylindrisch ausgebildeten Bereichs (13), stoff-, form- oder kraftschlüssig im Kontaktbereich mit diesem verbunden ist und am einschubseitigen Ende mit einer Anschrägung (12) versehen ist.

10. Rohrverbindung nach Anspruch 9
**dadurch gekennzeichnet,**
**dass** die Differenz zwischen dem Innendurchmesser des zylindrischen Bereichs (5) und dem Außendurchmesser der Innenstützhülse (20) mindestens der Wanddicke des Leitungsrohres (1) entspricht.
